# EUROPÄISCHE PATENTSCHRIFT

(11) **EP 2 176 579 B1**
(45) Veröffentlichungstag und Bekanntmachung des Hinweises auf die Patenterteilung: **02.10.2013**
(21) Anmeldenummer: 08787183.6
(22) Anmeldetag: 13.08.2008
(51) Int. Cl.: F16L 13/14, F16L 33/207

(54) **ROHRVERBINDUNG MIT ABFRAGBARER VERPRESSKENNZEICHNUNG**
TUBE CONNECTION WITH READABLE PRESSING MARKER
RACCORDEMENT DE TUBE AVEC MARQUAGE DE PRESSAGE INTERROGEABLE

(30) Priorität: 14.08.2007 DE 102007038273
(43) Veröffentlichungstag der Anmeldung: 21.04.2010
(73) Patentinhaber: Uponor Innovation AB, 73061 Virsbo (SE)
(72) Erfinder: GALLE, Roland, 97422 Schweinfurt (DE); ZISCHKE, Georg, 97332 Volkach (DE)
(74) Vertreter: Epping - Hermann - Fischer
(86) Internationale Anmeldenummer: PCT/EP2008/060632
(87) Internationale Veröffentlichungsnummer: WO 2009/021972

(56) Entgegenhaltungen:
- EP-A- 0 185 650
- EP-A- 1 772 659
- DE-U1- 20 103 434

## Beschreibung

Die Erfindung betrifft eine Rohrverbindung mit einem Fitting, an den ein Rohrende anschließbar ist, und ein an den Fitting anschließbares Rohr, wobei von außen abfragbar ist, ob die Rohrverbindung vorschriftsmäßig verpresst worden ist.

Der Einsatz von Fittingen zur Erzeugung von Rohrverbindungen ist bekannt. Hierbei wird das Ende eines anzuschließenden Rohres an einem Fitting fixiert. Bei dem Fitting kann es sich beispielsweise um einen Rohrverbinder, ein Winkelstück, ein Bogenstück, ein T-Verbindungsstück, eine Wandscheibe oder dergleichen Elemente handeln. Der Fitting selbst kann als Pressfitting oder als Schiebehülsefitting oder als Fitting mit einer Hülse aus einem Formgedächtnislegierungsmaterial ausgebildet sein. Schließlich ist auch der Einsatz von Schraubfittingen für Rohrverbindungen bekannt.

All den zuvor genannten Rohrverbindungen gemeinsam ist, dass innerhalb eines Anpressbereichs auf den Fitting und/oder das Rohr eine Anpresskraft zum Anschließen des Rohrendes an dem Fitting aufgebracht wird. Bei Pressfittingen erfolgt dies durch radiale Stauchung einer Presshülse und/oder einer Metalleinlage des Rohres mit Hilfe eines Presswerkzeuges. Bei Schraubfittingen wird die Anpresskraft durch Verschraubung einer beispielsweise Überwurfmutter realisiert, die auf einen geschlitzten Klemmring einwirkt, der von außen gegen das Rohr drückt. Bei Fittingen mit Schiebehülsen wird die Anpresskraft durch axiales Schieben einer nicht dehnbaren Hulse auf das aufgeweitete Rohrende, welches sich auf dem Fitting befindet, erzeugt.

Es ist wünschenswert, dass der Verpresszustand einer Rohrverbindung von außen detektierbar ist. Hierzu existieren im Stand der Technik Pressfittinge mit Verpresskennzeichnung, wie sie beispielsweise in WO 2004/096499 A1, DE 299 07 585 U1 und EP 1 790 896 A1 beschrieben sind. Nachteilig bei den bekannten Vorschlägen ist der Umstand, dass die Ablesung "auf Sicht" erfolgt. In Bereichen, die optisch nur bedingt einsehbar sind, sind die bekannten Verpresskennzeichnungssysteme weniger geeignet.

Ferner ist aus DE 198 56 769 C1 eine Rohrpressverbindung bekannt, die einen Kontaktstift als Lagekontrollelement aufweist. Der Kontaktstift ist so angeordnet, dass er sich radial durch die Wand des Pressfittingelements erstreckt. Sobald das Leitungsrohr durch axiales Einschieben in Höhe des Kontaktstiftes liegt, rückt der Kontaktstift radial aus. Dadurch wird angezeigt, dass das Leitungsrohr weit genug in den Pressfitting eingeschoben ist. Der Verpresszustand des Pressfittings kann jedoch durch den Kontaktstift nicht angezeigt werden.

Die EP 1772659 A2 zeigt eine Rohrverbindung mit Verpresskennzeichnung und offenbart den Oberbegriff vom Anspruch 1.

Aufgabe der Erfindung ist es, eine Rohrverbindung mit Verpresskennzeichnung vorzuschlagen, bei der die Abfrage der Verpresskennzeichnung verbessert ist.

Zur Lösung dieser Aufgabe wird mit der Erfindung eine Rohrverbindung mit abfragbarer Verpresskennzeichnung nach Anspruch 1 vorgeschlagen.

Die erfindungsgemäße Rohrverbindung umfasst einen Fitting und ein an diesen anschließbares Rohr. Der Fitting kann dabei beliebig ausgestaltet sein, wie es von den diversen unterschiedlichen Ausgestattungen von Fittingen her bekannt ist. Bei dem Rohr kann es sich um ein Kunststoff-Rohr, ein Kunststoff-Metall-Verbundrohr oder aber auch um ein Metallrohr handeln.

Erfindungsgemäß erfolgt die Verbindung von Fitting und Rohr durch Aufbringen einer Anpresskraft innerhalb eines Anpressbereichs zwischen Fitting und Rohr.

Erfindungsgemäß weist der Anpressbereich, also entweder der Fitting oder das Rohrende oder beide ein Verpresskennzeichnungs element auf, dessen magnetische und/oder elektrische Eigenschaften sich ändern, wenn der Anpressbereich der (vorgeschriebenen) Anpresskraft ausgesetzt worden ist. Die veränderten Eigenschaften werden also sozusagen im Element "gespeichert" und können anschließend berührungslos abgelesen bzw. detektiert werden. Hierzu wird die Rohrverbindung einem magnetischen oder elektrischen Feld ausgesetzt, das von einem Ablesegerät oder dergleichen erzeugt wird.

Der Vorteil der erfindungsgemäßen Verpresskennzeichnungsabfrage besteht darin, dass es nicht mehr einer Sichtkontrolle der Rohrverbindung bedarf. So kann beispielsweise die Rohrverbindung verbaut sein, ohne das dies die Abfragbarkeit der Verpresskennzeichnung beeinträchtigt.

Ein weiterer Vorteil für Anbieter von Rohrverbindungssystemen besteht darin, dass sie besser vor Produktpiraterie geschützt sind. Auch schützt die erfindungsgemäße Verpresskennzeichnung die Systemanbieter vor Regressansprüchen wegen vermeintlich unzulänglicher Produkte. Eine Verpressung von Rohren mit nicht vorschriftsmäßigen Fittingen kann nunmehr seitens des Systemanbieters leicht detektiert werden.

Gemäß der Erfindung ist vorgesehen, dass anhand der berührungslos detektierbaren magnetischen und/oder elektrischen Eigenschaften des Verpresskennzeichnungselements abgelesen werden kann, ob die Rohrverbindung der vorgeschriebenen Anpresskraft, welche sich innerhalb eines zulässigen Bereichs befinden muss, ausgesetzt worden ist. Neben einer qualitativen Aussage kann somit bei der erfindungsgemäßen Rohrverbindung auch eine quantitative Aussage getroffen werden.

Um von außen berührungslos detektieren zu können, ob der Anpressbereich der Anpresskraft ausgesetzt worden ist, bedarf es nicht notwendigerweise eines Druckaufnehmers innerhalb des Verpresskennzeichnungselements. Es ist aber umgekehrt nicht ausgeschlossen, dass das Element eine Druckmesszelle oder dergleichen Sensor aufweist. Entscheidend ist einzig und allein die Veränderung der magnetischen und/oder elektrischen Eigenschaft des Elements. So ist es beispielsweise möglich, dass als Element ein Dehnmessstreifen oder ein anderes Material verwendet wird, dass bei einer Verformung seine beispielsweise elektrischen Eigenschaften verändert. Derartige elektrisch leitenden Materialien sind an sich bekannt. Am Fitting bzw. am Rohrende sind beispielsweise vorzugsweise elektrische Kontakte vorgesehen, über die das Element einer elektrischen Spannung aussetzbar ist, die für die berührungslose Abfrage angelegt wird. Auch ein derartiges System wird als "berührungslos arbeitend" im Sinne der Erfindung angesehen.

Als Verpresskennzeichnungselement kommen ferner insbesondere Speicher auf Kunststoffbasis, RFID-Bausteine und Transponder oder piezoelektrische (beispielsweise piezoresistive) Materialien in Frage.

Das Verpresskennzeichnungselement kann an verschiedenen Orten innerhalb des Anpressbereichs der Rohrverbindung positioniert sein.

Weist der Fitting beispielsweise eine von außen gegen das Rohr andrückende Hülse (beispielsweise auch in Form eines Klemmrings) auf, so kann das Verpresskennzeichnungselement innerhalb dieser Hülse angeordnet sein. Alternativ kann es in einer Stützhülse des Fittings angeordnet sein, auf die das anzuschließende Rohrende aufgeschoben ist. Schließlich ist es auch denkbar, das Rohrende selbst mit dem Verpresskennzeichnungs element zu versehen. Die neueren Generationen von Polymerspeichern beispielsweise sind dafür geeignet, um auf andere Elemente "gegossen" zu werden. Man kann sich auch vorstellen, dass das Verpresskennzeichnungselement innerhalb eines Klebestreifens bzw. an diesem angeordnet ist, wobei dann der Klebestreifen um das anzuschließende Rohr oder die Presshülse (im Falle eines Press- bzw. Klemmfittings) herumgelegt wird.

Es ist erfindungsgemäß vorgesehen, dass in dem Verpresskennzeichnungsmaterial und/oder -element quantitative Informationen zur aufgebrachten Anpresskraft, wie beispielsweise deren Größe, speicherbar sind. Weitere Informationen, die abgespeichert werden können, können vorteilhafterweise der Herstellungszeitpunkt, die Produktionscharge, der Zeitpunkt der Verpressung und Informationen über die für die Rohrverbindung verwendeten Materialien sein.

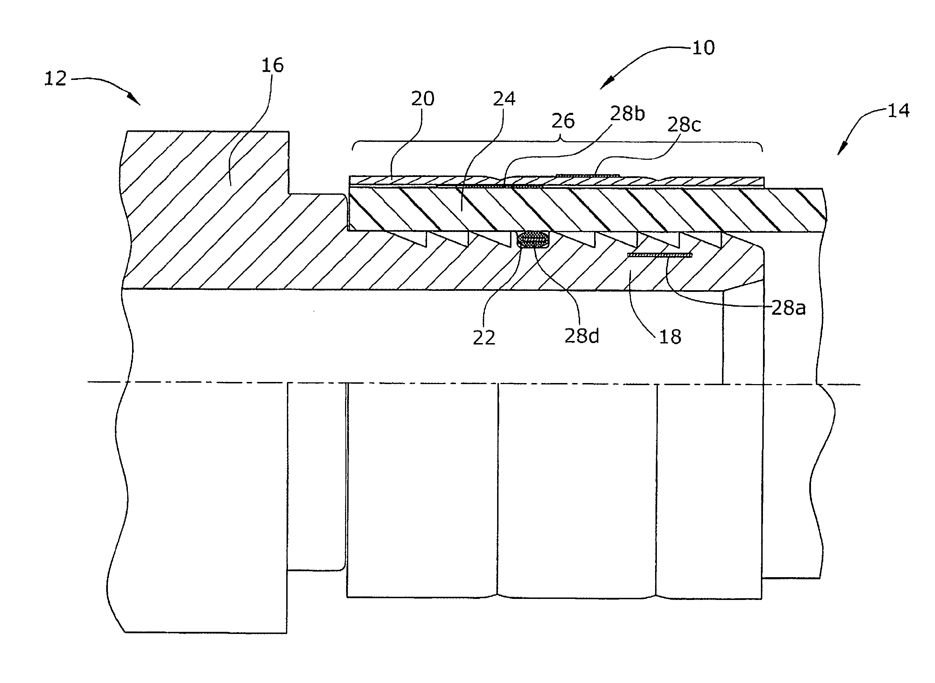

Die Erfindung wird nachfolgend anhand eines Ausführungsbeispiels, das in der Zeichnung dargestellt ist, näher erläutert.

In der Zeichnung ist ein Halbschnitt durch eine Rohrverbindung 10 gezeigt, die einen Fitting 12 und ein an diesen angeschlossenes Rohr 14 aufweist. Der Fitting 12 besteht beispielsweise aus Kunststoff, einer Metalllegierung oder einem Kunststoff-Metall-Verbundwerkstoff und weist einen Fittingkörper 16 auf, von dem eine Stützhülse 18 absteht. Der Fitting 12 umfasst ferner eine radial stauchbare Presshülse 20 aus in diesem Ausführungsbeispiel Metall (beispielsweise Aluminiumlegierung oder Stahl).

Auf die Stützhülse 18, die mit einem Dichtring 22 an ihrer Außenseite versehen sein kann, ist das Ende 24 des anzuschließenden Rohres 14 aufgeschoben. Konzentrisch um dieses Ende 24 herum befindet sich die Presshülse 20. Die Presshülse 20, das Rohrende 24, die Stützhülse 18 und, sofern vorhanden, der Dichtring 22 befinden sich innerhalb eines Anpressbereichs 26, innerhalb dessen auf die zuvor genannten Elemente eine Anpresskraft vorgeschriebener Größe (Mindest- und Maximalgröße) aufgebracht wird, um die Rohrverbindung 10 herzustellen.

Bei dem hier beschriebenen Ausführungsbeispiel der Erfindung befindet sich innerhalb des Anpressbereichs 26 ein Verpresskennzeichnungsmaterial und/oder -element 28a,28b,28c bzw. 28d, das sich entweder in der Stützhülse 18 (siehe bei 28a), innerhalb oder auf der Wandung des Rohrendes 24 (siehe bei 28b), innerhalb oder auf der Wandung der Presshülse 20 (siehe bei 28c) und/oder innerhalb des Materials des Dichtelements (siehe bei 28d) befindet. Im Falle der Anbringung des Materials bzw. Elements zur Wiedergabe des Verpresskennzeichnungszustandes auf dem Rohrende 24 bzw. der Presshülse 20 ist vorgesehen, beispielsweise einen Klebestreifen zu verwenden, der das Material bzw. Element 28b bzw. 28c trägt bzw. aufweist.

Das Verpresskennzeichnungselement bzw. -material 28a,28b,28c bzw. 28d weist magnetische und/oder elektrische Eigenschaften auf, die sich unter dem Einfluss der Aussetzung einer Anpresskraft verändern. Diese Veränderung kann dann berührungslos nach erfolgter Verpressung der Rohrverbindung 10 ausgelesen werden, womit eine 100 % vorschriftsmäßige Verpresskennzeichnung gegeben ist.

## Patentansprüche

1. Rohrverbindung mit abfragbarer Verpresskennzeichnung, mit
- einem Fitting (12) an den ein Rohrende (24) anschließbar ist,
- einem Rohr (14) mit einem an den Fitting (12) anschließbaren Ende (24) und
- einem Anpressbereich (26), in dem auf den Fitting (12) und/oder das Rohrende (24) eine Anpresskraft zum Anschließen des Rohrendes (24) an dem Fitting (12) aufbringbar ist, wobei
- der Anpressbereich (26) ein Verpresskennzeichnungselement mit einem Verpresskennzeichnungsmaterial (28a,b,c,d) aufweist, dessen magnetische oder elektrische Eigenschaften sich ändern, wenn der Anpressbereich (26) der Anpresskraft ausgesetzt worden ist, wobei
- eine magnetische oder elektrische Eigenschaft des Verpresskennzeichnungselements (28a,b,c,d) berührungslos detektierbar ist, **dadurch gekennzeichnet, dass** in dem Verpresskennzeichnungselement (28a,b,c,d) quantitative Informationen zur aufgebrachten Anpresskraft wie beispielsweise deren Größe speicherbar sind.

2. Rohrverbindung nach Anspruch 1, **dadurch gekennzeichnet, dass** sich magnetische Eigenschaften des Verpresskennzeichnungselements (28a,b,c,d) ändern, wenn der Anpressbereich (26) der Anpresskraft ausgesetzt worden ist.

3. Rohrverbindung nach Anspruch 1 oder 2, **dadurch gekennzeichnet,**
**dass** sich elektrische Eigenschaften des Verpresskennzeichnungselements (28a,b,c,d) ändern, wenn der Anpressbereich (26) der Anpresskraft ausgesetzt worden ist.

4. Rohrverbindung nach einem der Ansprüche 1 bis 3, **dadurch gekennzeichnet, dass** das Verpresskennzeichnungselement (28a,b,c,d) an oder in dem Fitting (12) oder dem Rohrende (24) angeordnet ist.

5. Rohrverbindung nach Anspruch 4, **dadurch gekennzeichnet, dass** das Verpresskennzeichnungselement (28a,b,c,d) in oder an einem Fittingkörper (16), einer Stützhülse (18), einem Dichtungselement (22) und/oder einer Presshülse (20) des Fittings (12) angeordnet ist.

## Claims

1. Pipe connection with a readable pressing marker, having
- a fitting (12) to which a pipe end (24) can be connected,
- a pipe (14) with an end (24) which can be connected to the fitting (12), and
- a contact-pressure region (26) in which a contact-pressure force for connecting the pipe end (24) to the fitting (12) can be applied to the fitting (12) and/or the pipe end (24), wherein
- the contact-pressure region (26) has a pressing marker element with a pressing marker material (28a, b, c, d) of which the magnetic or electrical properties change when the contact-pressure region (26) has been subjected to the action of the contact-pressure force, wherein
- a magnetic or electrical property of the pressing marker element (28a, b, c, d) can be detected in a contact-free manner,
**characterized in that** quantitative information about the applied contact-pressure force, for example the magnitude of the said contact-pressure force, can be stored in the pressing marker element (28a, b, c, d).

2. Pipe connection according to Claim 1, **characterized in that** magnetic properties of the pressing marker element (28a, b, c, d) change when the contact-pressure region (26) has been subjected to the action of the contact-pressure force.

3. Pipe connection according to Claim 1 or 2, **characterized in that** electrical properties of the pressing marker element (28a, b, c, d) change when the contact-pressure region (26) has been subjected to the action of the contact-pressure force.

4. Pipe connection according to one of Claims 1 to 3, **characterized in that** the pressing marker element (28a, b, c, d) is arranged on or in the fitting (12) or the pipe end (24).

5. Pipe connection according to Claim 4, **characterized in that** the pressing marker element (28a, b, c, d) is arranged in or on a fitting body (16), a supporting sleeve (18), a sealing element (22) and/or a compression sleeve (20) of the fitting (12).

## Revendications

1. Raccordement de tube présentant une caractérisation de pressage interrogeable, comprenant
- un raccord (12) auquel peut être raccordée une extrémité de tube (24),
- un tube (14) comprenant une extrémité (24) pouvant être raccordée au raccord (12) et
- une région de pression (26) dans laquelle peut être appliquée une force de pression sur le raccord (12) et/ou sur l'extrémité de tube (24) pour raccorder l'extrémité de tube (24) au raccord (12),
- la région de pression (26) comprenant un élément de caractérisation de pressage pourvu d'un matériau de caractérisation de pressage (28a, b, c, d) dont les propriétés magnétiques ou électriques changent si la région de pression (26) a été exposée à la force de pression,
- une propriété magnétique ou électrique de l'élément de caractérisation de pressage (28a, b, c, d) pouvant être détectée sans contact,
**caractérisé en ce que** des informations quantitatives sur la force de pression appliquée, comme par exemple son ampleur, peuvent être stockées dans l'élément de caractérisation de pressage (28a, b, c, d).

2. Raccordement de tube selon la revendication 1, **caractérisé en ce que** des propriétés magnétiques de l'élément de caractérisation de pressage (28a, b, c, d) changent si la région de pression (26) a été exposée à la force de pression.

3. Raccordement de tube selon la revendication 1 ou 2, **caractérisé en ce que** des propriétés électriques de l'élément de caractérisation de pressage (28a, b, c, d) changent si la région de pression (26) a été exposée à la force de pression.

4. Raccordement de tube selon l'une quelconque des revendications 1 à 3, **caractérisé en ce que** l'élément de caractérisation de pressage (28a, b, c, d) est disposé sur ou dans le raccord (12) ou l'extrémité de tube (24).

5. Raccordement de tube selon la revendication 4, **caractérisé en ce que** l'élément de caractérisation de pressage (28a, b, c, d) est disposé dans ou sur un corps de raccord (16), une douille de support (18), un élément d'étanchéité (22) et/ou une douille de pressage (20) du raccord (12).
